Europäisches Patentamt

European Patent Office

Office européen des brevets

(11) Veröffentlichungsnummer: **0 306 081 B1**

(12) **EUROPÄISCHE PATENTSCHRIFT**

(45) Veröffentlichungstag der Patentschrift: **23.06.93**

(21) Anmeldenummer: **88201801.3**

(22) Anmeldetag: **24.08.88**

(51) Int. Cl.5: **H05G 1/26**, G21K 1/02,
G01N 23/04

(54) **Röntgengerät für Schlitzradiographie.**

(30) Priorität: **29.08.87 DE 3728878**

(43) Veröffentlichungstag der Anmeldung:
**08.03.89 Patentblatt 89/10**

(45) Bekanntmachung des Hinweises auf die
Patenterteilung:
**23.06.93 Patentblatt 93/25**

(84) Benannte Vertragsstaaten:
**DE FR GB**

(56) Entgegenhaltungen:
**EP-A- 0 074 596**
**EP-A- 0 165 850**
**EP-A- 0 170 551**
**GB-A- 2 181 330**
**US-A- 4 718 075**

**PHYSICS IN MEDICINE & BIOLOGY, Band 30,
Nr. 7, Juli 1985, Seiten 713-721, London, GB;
D.B. PLEWES et al.: "An x-ray collimator design for raster scanning geometries"**

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB**

(72) Erfinder: **Frings, Gottfried
Jägerhausstrasse 27
W-5190 Stolberg(DE)**
Erfinder: **Schiebel, Ulrich, Dr.
Zehntweg 60
5100 Aachen(DE)**
Erfinder: **Hillen, Walter, Dr.
Dinkersmichweg 38
5100 Aachen(DE)**

(74) Vertreter: **Hartmann, Heinrich, Dipl.-Ing. et al
Philips Patentverwaltung GmbH Wendenstrasse 35 Postfach 10 51 49
W-2000 Hamburg 1 (DE)**

## Beschreibung

Die Erfindung betrifft ein Röntgengerät mit einer Drehanodenröntgenröhre einem Aufzeichnungsmedium und einer Blendenanordnung zum Ausblenden eines Strahlenbündels aus der von der Röntgenröhre erzeugten Röntgenstrahlung, wobei während einer Röntgenaufnahme das Strahlenbündel und das dadurch belichtete Aufzeichnungsmedium relativ zueinander in einer Richtung verschoben werden.

Röntgengeräte dieser Art sind bekannnt - und zwar sowohl mit ebenem Aufzeichnungsmedium (vgl. DE-OS 23 51 473) als auch mit zylinderförmigem Aufzeichnungsmedium (DE-OS 35 34 768). Im Vergleich zu einem konventionellen Röntgengerät, bei dem das Aufzeichnungsmedium an allen Stellen gleichzeitig belichtet wird, ergibt sich hierbei eine deutlich verbesserte Streustrahlenunterdrükkung. Auf der anderen Seite wird die Röntgenröhre wesentlich stärker belastet, weil ein wesentlich kleinerer Teil der Röntgenstrahlung als bei konventionellen Röntgengeräten zur Bildgebung ausgenutzt wird. Um nicht zu unvertretbar langen Aufnahmezeiten zu kommen, ist es beim derartigen Röntgengerät erforderlich, als Röntgenröhre eine Drehanodenröntgenröhre zu verwenden. Wenn die Drehanoden-Röntgenröhre mit ihrer Drehachse parallel zur Verschiebungsrichtung des Strahlenbündels montiert wird, ist es möglich, Anodenscheiben mit einem sehr kleinen Anodenwinkel zu verwenden, die bei gleicher (scheinbarer) Brennfleckgröße eine höhere Strahlungsintensität liefern als Drehanodenröntgenröhren mit einem größeren Anodenwinkel.

Es hat sich aber gezeigt, daß in einem solchen Fall - und in jedem anderen Fall, in dem die Achse der Röntgenröhre nicht genau senkrecht zur Verschiebungsrichtung verläuft -in der Röntgenaufnahme zur Verschiebungsrichtung senkrechte Streifen auftreten können - und zwar auch dann, wenn der Brennfleck der Röntgenröhre und die Blendenanordnung exakt justiert sind und die Verschiebung mit exakt gleichförmiger Geschwindigkeit erfolgt.

Aufgabe der vorliegenden Erfindung ist es, ein Röntgengerät der eingangs genannten Art so auszugestalten, daß die geschilderten streifenförmigen Artefakte in der Röntgenaufnahme weitgehend unterdrückt werden. Diese Aufgabe wird erfindungsgemäß dadurch gelöst, daß das Intensitätsprofil des Strahlenbündels am Ort des Aufzeichnungsmediums, die Geschwindigkeit der Relativverschiebung zwischen dem Strahlenbündel und dem Aufzeichnungsmedium und die während der Aufnahme gegebene Drehzahl der Drehanodenröntgenröhre so aufeinander abgestimmt sind, daß die durch periodische Verschiebungen des Brennflecks während der Aufnahme bedingten Intensitätsschwankungen einander kompensieren.

Die Erfindung basiert auf der Erkenntnis, daß die streifenförmigen Artefakte der Röntgenaufnahme auf einer periodischen Bewegung des Brennflecks der Röntgenröhre in axialer Richtung beruht. Diese vor allem durch einen nie völlig zu vermeidenden Axialschlag der Anodenscheibe hervorgerufenen Bewegungen stellen eine Schwingung mit der Frequenz des Drehanodenantriebs dar und haben eine Komponente in der Verschiebungsrichtung des Strahlenbündels - wenn nicht die Drehachse der Anodenscheibe exakt senkrecht zur Verschieberichtung verläuft.

Diese der linearen und mit konstanter Geschwindigkeit erfolgenden Verschiebebewegung überlagerten Schwingungen führen - trotz geringer Amplitude - dazu, daß in Verschieberichtung hintereinander auf dem Aufzeichnungsmedium befindliche Punkte unterschiedlich lange dem Halbschattenbereich der Röntgenstrahlung ausgesetzt sind, der durch die Ausblendung des Röntgenstrahlenbündels in Verbindung mit der endlichen Größe des Brennflecks hervorgerufen wird. Dadurch ergibt sich einer ortsabhängige Intensitätsmodulation der Röntgenstrahlung, die zu den geschilderten Streifen führt.

Es liegt auf der Hand, daß die Intensitätsmodulation und die dadurch bewirkten Streifen unterdrückt werden können, wenn durch die zur Blendenanordnung gehörende und zwischen dem Untersuchungsbereich und dem Aufzeichnungsmedium befindliche Sekundärblende das durch den Untersuchungsbereich gelangende Röntgenstrahlenbündel so eingeengt wird, daß die Halbschattenbereiche - die im folgenden auch als "Flanken" bezeichnet werden - abgeschnitten werden. Dadurch geht aber auch ein Teil der Strahlungsintensität der den Untersuchungsbereich durchsetzt hat und - falls sich darin ein zu untersuchender Patient befindet, diesen strahlenmäßig belastet hat - für die Bildgebung verloren.

Die Erfindung geht einen anderen Weg, bei dem auch die Strahlung aus dem Halbschattenbereich bzw. aus den Flanken des Intensitätsprofiles ausgenutzt werden kann. Sie beruht auf der Erkenntnis, daß sich für ein vorgegebenes Intensitätsprofil Geschwindigkeit und Drehzahl so wählen lassen, daß für einen beliebigen Punkt auf dem Aufzeichnungsmedium beim Durchlaufen der Flanken des Intensitätsprofiles einer Phase, in der die Intensität aufgrund der Schwingung vergrößert ist (gegenüber dem Fall ohne Schwingungen) eine andere Phase gegenübersteht, in der die Intensität in gleichem Maß verringert ist, so daß sich die Schwankungen - über den gesamten Weg des Punktes durch die Flanken des Intensitätsprofiles - kompensieren.

Es gibt verschiedene Möglichkeiten, eine solche Kompensation zu erreichen:
Eine erste Möglichkeit besteht darin, daß die Abstimmung derart ist, daß die Zeit, in der ein Punkt auf dem Aufzeichnungsmedium von einer Flanke des Intensitätsprofils überstrichen wird, dem Kehrwert der Drehzahl der Drehanodenröntgenröhre oder einem ganzzahligen Vielfachen davon entspricht.

Eine andere Möglichkeit besteht darin, daß die Zeit, in der ein Punkt auf dem Aufzeichnungsmedium von einer Flanke und dem gradlinigen Teil des Intensitätsprofiles überstrichen wird, dem Kehrwert der Drehzahl der Drehanodenröntgenröhre oder einem ganzzahligen Vielfachen davon entspricht.

Nach einer bevorzugten Weiterbildung ist vorgesehen, daß das Intensitätsprofil so gestaltet ist, daß sich die Länge (x3 - x2) des Plateaubereiches zur Länge (x2 - x1) einer Flanke oder zur Länge (x3 - x1) einer Flanke und des Plateaubereiches verhält wie m/s bzw. n/s wobei s eine ganze Zahl ist und m bzw. n eine ganze Zahl entsprechend der Anzahl der Umdrehungen der Drehanode beim Überstreichen eines Punktes auf dem Aufzeichnungsmedium durch eine Flanke bzw. durch eine Flanke und den Plateaubereich des Intensitätsprofils.

Diese Weiterbildung gestattet es, die beiden oben genannten Bedingungen gleichzeitig zu erfüllen, was zu einem ausgeprägten Minimum der Intensitätsmodulation als Funktion der Frequenz (bei vorgegebener Verschiebegeschwindigkeit und vorgegebenem Intensitätsprofil) führt. Die dafür erforderliche Gestaltung des Intensitätsprofiles läßt sich durch die Lage und die Öffnung der (Primär-bzw. Sekundär-) Blenden der Blendenanordnung den Erfordernissen anpassen.

Die Erfindung wird nachstehend anhand der Zeichnungen näher erläutert. Es zeigen

Fig. 1    ein Röntgengerät der eingangs genannten Art in schematischer, nicht maßstäblicher Darstellung,
Fig. 2    ein typisches Intensitätsprofil für das bei einem derartigen Röntgengerät erzeugt Röntgenstrahlenbündel,
Fig. 3    ein Röntgengerät nach der Erfindung.

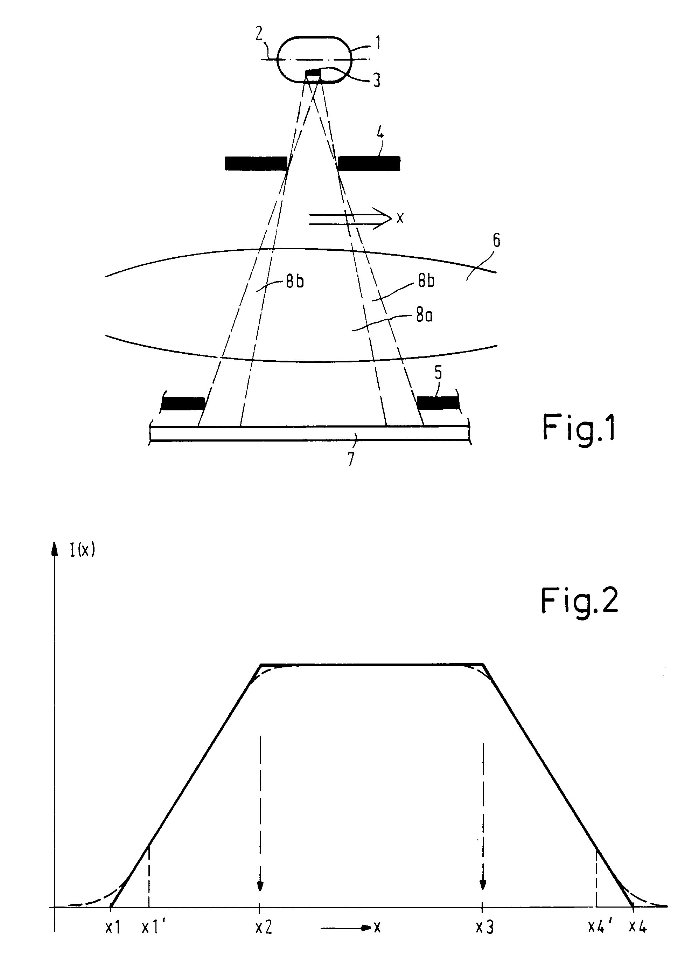

In Fig. 1 ist mit 1 eine nur schematisch angedeutete Röntgenröhre bezeichnet. Die nicht näher dargestellte Anodenscheibe dieser Drehanodenröntgenröhre ist um eine horizontal verlaufende Achse 2 drehbar. Mit 3 ist der scheinbare Brennfleck der Drehanodenröntgenröhre bezeichnet (der tatsächliche Brennfleck verläuft entsprechend dem Anodenwinkel der Anodenscheibe geneigt). Aus der im Brennfleck 3 erzeugten Röntgenstrahlung blendet eine Blendenanordnung ein Röntgenstrahlenbündel aus. Die Blendenanordnung besteht aus einer Primärblende 4, die sich zwischen dem Brennfleck und dem Untersuchungsbereich befindet - in der Regel im Gegensatz zur Zeichnung in unmittelbarer Nähe des Brennflecks - und aus einer Sekundärblende 5, die sich zwischen dem Untersuchungsbereich, der durch das Untersuchungsobjekt 6 symbolisiert wird, und dem Aufzeichnungsträger 7 befindet. Die Blenden 4 und 5 sind dabei jeweils symmetrisch zum Brennfleck 3 angeordnet, so daß das Röntgenstrahlenbündel symmetrisch zum Lot von der Mitte des Brennflecks auf den Aufzeichnungsträger 7 verläuft. Als Aufzeichnung kann ein Film dienen, aber auch ein Photoleiter, der die Röntgenstrahlung in ein Ladungsmuster umsetzt, oder ein Speicherphosphor, beispielsweise gemäß der US-PS 4 239 968.

Da der Brennfleck 3 der Röntgenröhr 1 nicht exakt punktförmig ist, sondern eine endliche Ausdehnung hat, gibt es in dem von der Primärblende 4 ausgeblendeten Strahlenbündel einen Bereich 8a, der der gesamten durch die Primärstrahlenblende 4 hindurchtretenden Röntgenstrahlung ausgesetzt ist, und beiderseits dieses Bereiches einen Halbschattenbereich 8b, der jeweils nur von einem Teil der Röntgenstrahlung getroffen wird, die durch die Primärblende 4 hindurchgeht.

Die Primärblende 4 und die Sekundärblende 5 haben eine solche Öffnung, daß das Format des Aufzeichnungsmediums 7 in Richtung senkrecht zur Zeichenebene der Fig. 1 vollständig von der Röntgenstrahlung erfaßt wird, während es in der dazu senkrechten, zur Richtung der Drehachse 2 parallelen Richtung nur einen vergleichsweise kleinen Teil des Aufzeichnungsmediums erfaßt. Um eine vollständige Röntgenaufnahme zu erhalten, müssen daher das Röntgenstrahlenbündel 8a, 8b und der Untersuchungsbereich 6 relativ zueinander in Richtung des Pfeiles X, d.h. parallel zur Drehachse 2 verschoben werden, und bei einem Aufzeichnungsmedium 7 mit zylinderförmig gekrümmter Oberfläche muß zusätzlich dieses so gedreht werden, daß die Röntgenstrahlung, die einen bestimmten Punkt des Untersuchungsbereiches durchsetzt hat, immer den gleichen Punkt des Aufzeichnungsmediums trifft. Die hierfür erforderlichen Antriebe sind in der Fig. 1 der Übersicht halber nicht dargestellt.

In Fig. 2 ist der Verlauf der Röntgenstrahlenintensität I am Orte des Aufzeichnungsmediums 7 als Funktion des Ortes x in ausgezogenen Linien dargestellt. Dieser Verlauf stellt das Intensitätsprofil des Röntgenstrahlenbündels in der Verschieberichtung dar. Das Intensitätsprofil hat einen trapezförmigen Verlauf, wenn die Intensität der emittierten Röntgenstrahlung überall im Brennfleck gleich groß ist. Der horizontal verlaufende Teil zwischen den Grenzen x2 und x3 entspricht dabei dem Bereich 8a, und die Flanken zwischen x1 und x2 sowie zwischen x3 und x4 entsprechen den Halbschattenbereichen 8b.

Die erwähnte, in Richtung der Drehachse 2 periodisch hin und hergehende Bewegung des Brennfleckes 3, die in der Praxis kaum größer wird als einige zehn μm, führt zu einem "Jitter" der Flanken des Intensitätsprofiles und dazu, daß ein Punkt auf dem Aufzeichnungsmedium, der diese Flanken durchläuft, mehr oder weniger belichtet wird als ein Punkt bei festem Brennfleck. Diese Intensitätsmodulation Im ist eine Fuktion der x-Koordinate des jeweiligen Punktes. Es läßt sich zeigen, daß dafür die Beziehung gilt

(1)     $Im = c(\cos(wt1 + ß) - \cos(wt2 + ß) + \cos(wt3 + ß) - \cos(wt4 + ß))$

Dabei ist
- w die Kreisfrequenz der Anodenscheibe, d.h. deren Drehzahl multipliziert mit dem Faktor 2,
- c eine Konstante,
- ß ein Phasenwinkel, der nur von der x-Koordinate des betreffenden Punktes abhängt, und
- t1...t4 sind die Zeitpunkte, an denen der betreffende Punkt die Orte x1...x4 im Intensitätsprofil erreicht.

Es gibt eine Reihe von Möglichkeiten zur Unterdrückung der Intensitätsmodulation:

A) Die Intensitätsmodulations Im wird Null, wenn die Beziehung gilt

(2)     $x2 - x1 = x4 - x3 = mv/u$

Dabei ist
- m eine ganze Zahl,
- v die Geschwindigkeit mit der das Röntgenstrahlenbündel relativ zum Untersuchungsbereich verschoben wird und
- u die Drehzahl der Anodenscheibe der Drehanodenröntgenröhre 1.

Gleichung (2) besagt, daß die Zeit, in der ein Punkt auf dem Aufzeichnungsmedium eine Flanke (d.h. die Strecke x1 - x2 bzw. die Strecke x3 - x4) durchläuft m-mal so groß sein soll, wie die Periodendauer einer Umdrehung der Anodenscheibe.

In diesem Fall hat in dem Zeitraum, in dem ein Punkt eine der Flanken durchläuft (z.B. t2 - t1) der Brennfleck genau eine (oder mehrere) Perioden seiner hin- und hergehenden Bewegung absolviert, so daß die dadurch hervorgerufenen Intensitätsschwankungen, die sich dem Intensitätsanstieg bzw. -abfall beim Durchlaufen einer Flanke überlagern, einander kompensieren.

B) Die Intensitätsmodulation und damit die streifenförmigen Artefakte der Röntgenaufnahme, werden auch dann unterdrückt, wenn die Beziehung gilt

(3)     $x3 - x1 = x4 - x2 = nv/u$

wobei n eine ganze Zahl ist. Diese Gleichung besagt, daß die Zeit für das Durchlaufen einer Flanke (d.h. z.B. der Strecke x1 - x2) und des Plateaubereiches x2 - x3 des Intensitätsprofiles der Dauer einer Umdrehung bzw. einem Vielfachen davon entsprechen soll.

In diesem Fall durchläuft ein Punkt die ansteigende Flanke (x1, x2) des Intensitätsprofiles in der gleichen Phasenlage der Anodenschwingung wie die abfallende Flanke. Dadurch erhält jeder Punkt beim Durchlaufen der einen Flanke das an Strahlungsintensität weniger (mehr) was er beim Durchlaufen der anderen Flanke mehr (weniger) erhält.

Besonders günstige Verhältnisse ergeben sich, wenn die beiden Gleichungen (2) und (3) gleichzeitig erfüllt sind. Um den Nullpunkt der Intensitätsmodulation als Funkton der Drehzahl herum ergibt sich dabei nämlich ein besonders breites Minimum, so daß auch dann, wenn die nach Gleichung (2) bzw. (3) erforderlichen Werte der Drehzahl u bzw. der Verschiebegeschwindigkeit v nicht genau eingehalten sind, praktisch keine streifenförmigen Artekfakte auftreten.

Die Bedingungen gemäß den Gleichungen (2) und (3) sind dann gleichzeitig erfüllt, wenn zusätzlich zur Gleichung (2) oder zur Gleichung (3) die Gleichung (4) erfüllt ist.

(4)     $x3 - x2 = sv/u$

wobei s eine ganze Zahl ist. Diese zusätzliche Bedingung besagt, daß die Zeit, in der der Plateaubereich x3 - x2 einen Punkt auf dem Aufzeichnungsmedium überstreicht, dem Kehrwert der Drehzahl oder einem Vielfachen davon entsprechen muß.

Die Bedingungen gemäß einer der Gleichungen (2) oder (3) lassen sich durch geeignete Wahl der Verschiebegeschwindigkeit v und/oder der Anodendrehzahl u für jedes beliebige Intensitätsprofil erfüllen. Wenn aber zusätzlich noch die Gleichung (4) erfüllt werden soll, muß das Intensitätsprofil einen solchen Verlauf haben, daß die Länge x3 - x2 des Plateaubereiches und die Länge (x1 - x2 bzw. x3 - x4) einer Flanke im Verhältnis zweier ganzer Zahlen zueinander stehen.

Es gibt verschiedene Möglichkeiten, das Intensitätsprofil den Erfordernissen anzupassen. Beispielsweise kann die Primärblende verstellt oder ihr Abstand zum Röntgenstrahler 1 geändert werden; die einfachste Möglichkeit besteht jedoch darin, die Sekundärblende 5 so zu verstellen, daß -wie in Fig. 1 angedeutet - ein Teil des Halbschattenbereiches 8b abgeschnitten wird. In diesem Fall erreicht das Intensitätsprofil bereits an den Stellen x1′ bzw. x4′ - (vgl. Fig. 2) den Wert Null, und daher müssen diese Werte anstelle von x1 und x4 in die Gleichungen (2), (3) und (4) eingesetzt werden.

In der Praxis ist die Röntgenstrahlenintensität nicht homogen über den Brennfleck 3 verteilt, sondern nimmt in der Regel zu den Brennfleckrändern hin ab. Infolgedessen hat das Intensitätsprofil auch nicht den in Fig. 2 mit ausgezogenen Linien angedeuteten Verlauf, sondern einen Verlauf, bei dem der Differentialquotient der Intensität I nach dem Weg x sich kontinuierlich mit dem Weg x ändert. Das bedeutet, daß im Bereich von x1, x2, x3 und x4 das Intensitätsprofil einen gerundeten Verlauf hat, wie in Fig. 2 durch gestrichelte Linien angedeutet. In diesem Fall wird jedoch die Flanke ebenfalls durch die ausgezogene Gerade gebildet, die die Tangente an den Intensitätsverlauf etwa bei der Hälfte der maximalen Intensität darstellt. Auch in diesem Fall sind die Punkte x1, x2 usw. durch die Schnittpunkte dieser Tangente mit dem Plateaubereich bzw. der Geraden $I(x) = 0$ definiert.

Zur Unterdrückung der streifenförmigen Artefakte auf der Röntgenaufnahme kann dann in der Praxis wie folgt vorgegangen werden: Bei vorgegebenen Röntgenstrahler und bei einer festgelegten Geometrie des Aufnahmesystems (Öffnung der Primär- und Sekundärblende sowie deren Abstand vom Brennfleck) wird einmalig das Intensitätsprofil ausgemessen (oder berechnet) und damit die Positionen x1, x2, x3 und x4 bestimmt, wobei gegebenenfalls x1 und x4 durch x1′ und x4′ zu ersetzen sind. Die Gleichungen (2) und (3) werden dann dadurch erfüllt, daß entweder bei vorgegebener Verschiebegeschwindigkeit v die Drehzahl u der Anode oder bei vorgegebener Drehzahl u die Verschiebegeschwindigkeit v entsprechend Gleichung (2) oder (3) geregelt wird. Jedoch ist es auch möglich, bei vorgegebener Drehzahl und vorgegebener Verschiebegeschwindigkeit die Öffnung der Primär- und/oder der Sekundärblende zu verändern. Wenn die Sekundärblende allerdings eine größere Ausdehnung hat als das Röntgenstrahlenbündel, müssen in den Gleichungen (2) und (3) die Werte X1 und X4 eingesetzt werden.

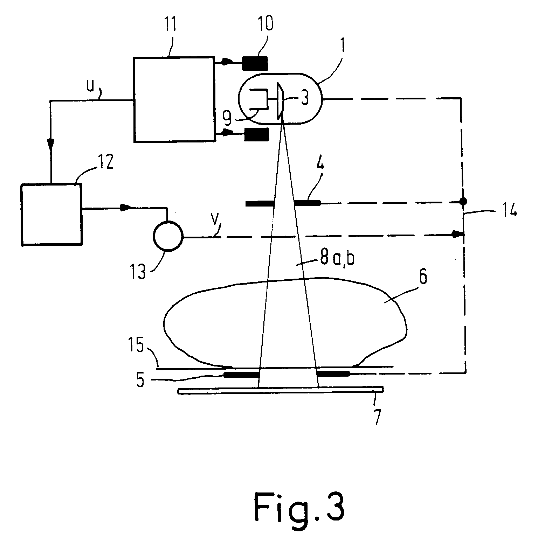

In Fig. 3 ist in schematischer Darstellung ein erfindungsgemäßes Röntgengerät skizziert. die Anodenscheibe 3, auf deren geneigter Ringfläche sich der Brennfleck für die Röntgenstrahlung befindet, ist mit einem Rotor 9 verbunden, der von einem Stator 10 angetrieben wird. Die Antriebsenergie wird von einem steuerbaren Generator 11 geliefert. Der Generator 11 ermittelt darüber hinaus, wie in der DE-PS 27 32 852 beschrieben, aus den Statorströmen das Erreichen einer bestimmten Drehzahl und signalisiert dies einem Regelkreis 12, der auf einen Motor 13 einwirkt. Der Motor 13 wirktauf eine nur schematisch durch Striche angedeutete mechanische Koppeleinrichtung zwischen Primärblende 4 und Sekundärblende 5 und vorzugsweise auch dem Röntgenstrahler 1 ein, so daß diese in horizontaler Richtung verschoben werden und das Strahlenbündel 8a bzw. 8b über das Aufzeichnungsmedium verschoben wird und somit verschiedene Bereiche des auf einer Tischplatte 15 gelagerten Patienten 6 durchstrahlt.

Eine Röntgenaufnahme vollzeiht sich damit folgendermaßen. Zunächst wird der Generator 11 aktiviert, so daß die Anodenscheibe 3 beschleunigt wird. Wenn die vorgegebene Drehzahl u erreicht ist, wird der Antrieb entweder ganz abgeschaltet oder auf eine niedrigere Energie umgeschaltet, die gerade zum Weiterlaufen mit der gewünschten Drehzahl u ausreicht. Danach wird der Regelkreis 12 für den Motor 13 aktiviert, so daß die Koppeleinrichtung 14 und damit das Strahlenbündel 8a, 8b verschoben wird, bis nach einer definierten Wegstrecke die gewünschte und durch den Regelkreis 12 vorgegebene Geschwindigkeit v erreicht ist. In diesem Augenblick wird in dem nicht näher dargestellten Hochspannungsgenerator für die Röntgenröhre 1 die Hochspannung eingeschaltet, so daß die Röntgenröhre Röntgenstrahlung erzeugt, aus der das Strahlenbündel 8a, b ausgeblendet wird. Die Röntgenstrahlung wird abgeschaltet sobald nach einiger Zeit, die von der Geschwindigkeit v und der Länge des Aufzeichnungsmediums 7 abhängt der Aufzeichnungsträger 7 vollständig belichtet ist.

Es versteht sich von selbst, daß vor Beginn der Aufnahme die Einheit 4,5,14 so positioniert sein muß, daß erst nach dem Durchlauf der Wegstrecke innerhalb der die Nenngeschwindigkeit v erreicht wird bzw. beim Einschalten der Hochspannung der Rand des Aufzeichnungsträgers erreicht ist.

Es ist auch möglich, bei vorgegebener Geschwindigkeit v die Anodendrehzahl so zu regeln, daß die Gleichung 2 und/oder 3 erfüllt wird. Zu diesem Zweck muß der Generator 11 Teil eines Regelkreises sein, in dem die Drehzahl der Anodenscheibe 3 kontinuierlich gemessen wird und die Energie so variiert wird, bis der Sollwert u der Drehzahl erreicht ist.

Bei einem Röntgengerät gemäß der DE-OS 35 34 768, bei dem das Aufzeichnungsmedium 7 nicht eben ist sondern zylinderförmig und um die Zylinderachse rotiert, muß zusätzlich die Drehzahl, mit der des Aufzeichnungsmediums um die Zylinderachse rotiert, mit der Verschiebegeschwindigkeit des Zylinders synchronisiert sein, so daß die Verschiebegeschindigkeit der Geschwindigkeit auf der Trommeloberfläche entspricht.

Bei dem Röntgengerät beträgt beispielsweise die Länge (x3 - x2) des Plateaubereiches 6 mm. Die Primärblende 4 ist so eingestellt, daß sich eine Fußbreite (x4 - x1) des Strahlenprofiles von 14 mm ergeben würde, wenn sie nicht durch die Öffnung der Sekundärblende 5 auf 12 mm (x4' - x1') eingeengt würde. Mit diesem Intensitätsprofil und bei einer Geschwindigkeit v der Relativverschiebung zwischen dem Strahlenbündel 8a, 8b und dem Aufzeichnungsmedium 7 von 450 mm/s erfüllen bereits Drehzahlen der Anodenscheibe von 50 bzw. 100 Umdrehungen pro Sekunde die Gleichung (3); jedoch ist eine Drehzahl von 150 Umdrehungen pro Sekunde zu bevorzugen, weil hierbei die Gleichungen (2) und (3) gleichzeitig erfüllt sind und das Intensitätsminimum so breit ist, daß auch kleine Abweichungen von den exakten Werten nach den Gleichungen (2) bzw. (3) noch nicht zu nennenswerten Streifen auf der Röntgenaufnahme führen.

**Patentansprüche**

1. Röntgengerät mit einer Drehanodenröntgenröhre (1), einem Aufzeichnungsmedium (7) und einer Blendenanordnung (4,5) zum Ausblenden eines Strahlenbündels (8a, 8b) aus der von der Röntgenröhre erzeugten Röntgenstrahlung, wobei während einer Röntgenaufnahme das Strahlenbündel (8a, 8b) und das dadurch belichtete Aufzeichnungsmedium (7) relativ zueinander in einer Richtung verschoben werden, dadurch gekennzeichnet, daß das Intensitätsprofil (I(x)) des Strahlenbündels (8,8a, 8b) am Ort des Aufzeichnungsmediums (7), die Geschwindigkeit (v) der Relativverschiebung zwischen dem Strahlenbündel und dem Aufzeichnungsmedium und die während der Aufnahme gegebene Drehzahl (u) der Drehanodenröntgenröhre so aufeinander abgestimmt sind, daß die durch periodische Verschiebungen des Brennflecks während der Aufnahme bedingten Intensitätsschwankungen einander kompensieren.

2. Röntgengerät nach Anspruch 1, dadurch gekennzeichnet, daß die Abstimmung derart ist, daß die Zeit (t2 - t1 bzw. t4 - t3), in der ein Punkt auf dem Aufzeichnungsmedium (7) von einer Flanke des Intensitätsprofils überstrichen wird, dem Kehrwert der Drehzahl (u) der Drehanodenröntgenröhre (1) oder einem ganzzahligen Vielfachen (m) davon entspricht.

3. Röntgengerät nach Anspruch 1 oder 2, dadurch gekennzeichnet, daß die Zeit (t3 - t1 bzw. t4 - t2), in der ein Punkt auf dem Aufzeichnungsmedium (7) von einer Flanke und dem Plateau des Intensitätsprofiles (I) überstrichen wird, dem Kehrwert der Drehzahl (u) der Drehanodenröntgenröhre oder einem ganzzahligen Vielfachen (n) davon entspricht.

4. Röntgengerät nach Anspruch 2 oder 3, dadurch gekennzeichnet, daß das Intensitätsprofil so gestaltet ist, daß sich die Länge (x3 - x2) des Plateaubereiches zur Länge (x2 - x1) einer Flanke oder zur Länge (x3 - x1) einer Flanke und des Plateaubereiches verhält wie m/s bzw. n/s wobei s eine ganze Zahl ist und m bzw. n eine ganze Zahl entsprechend der Anzahl der Umdrehungen der Drehanode bei Überstreichen eines Punktes auf dem Aufzeichnungsmedium durch eine Flanke bzw. durch eine Flanke und den Plateaubereich des Intensitätsprofiles.

5. Röntgengerät nach einem der vorhergehenden Ansprüche, dadurch gekennzeichnet, daß wenigstens ein Regelkreis (12) vorgesehen ist, der die Geschwindigkeit v der Relativverschiebung in Abhängigkeit von der Drehzahl u oder die Drehzahl u in Abhängigkeit von der Geschwindigkeit v der Relativverschiebung regelt.

**Claims**

1. An X-ray apparatus, comprising a rotary-anode X-ray tube (1), a recording medium (7) and a diaphragm device (4, 5) for forming a radiation beam (8a, 8b) from the X-rays produced by the X-ray tube, the radiation beam (8a, 8b) and the recording medium (7) exposed thereto being displaced relative to one another in one direction during an X-ray exposure, characterized in that the intensity profile (I(x)) of the radiation beam (8, 8a, 8b) at the area of the recording medium (7), the speed (v) of the relative displacement between the radiation beam and the recording medium, and the given number of revolutions per unit of time (u) of the rotary-anode X-ray tube during the exposure are adapted to one another so that the intensity fluctuations caused by periodic shifts of the focal spot during the exposure compensate for one another.

2. An X-ray apparatus as claimed in Claim 1, characterized in that the adaptation is such that the time (t2 - t1 or t4 - t3) during which a point on the recording medium (7) is passed by an edge of the intensity profile corresponds to the reciprocal value of the number of revolutions per unit of time (u) of the rotary-anode X-ray tube (1) or to an integer multiple (m) thereof.

3. An X-ray apparatus as claimed in Claim 1 or 2, characterized in that the time (t3 - t1 or t4 - t2) during which a point on the recording medium (7) is passed by an edge plus the plateau of the intensity profile (I) corresponds to the reciprocal value of the number of rotations per unit of time (u) of the rotary-anode X-ray tube or to an integer multiple (n) thereof.

**4.** An X-ray apparatus as claimed in Claim 2 or 3, characterized in that the intensity profile is shaped so that the length (x3 - x2) of the plateau relates to the length (x2 - x1) of an edge or to the length (x3 - x1) of an edge plus the plateau as m/s or n/s, respectively, where s is an integer and m and n are integers corresponding to the number of revolutions of the rotary anode during the passage of a point on the recording medium by an edge or by an edge plus the plateau, respectively, of the intensity profile.

**5.** An X-ray apparatus as claimed in any one of the preceding Claims, characterized in that there is provided at least one control circuit (12) which controls the speed v of the relative displacement in dependence on the number of revolutions per unit of time u or controls the number of revolutions per unit of time u in dependence on the speed v of the relative displacement.

**Revendications**

**1.** Appareil à rayons X comportant un tube à rayons X à anode rotative (1), un support d'enregistrement (7) et un agencement de diaphragmes (4,5) pour former un faisceau de rayonnement (8a, 8b) à partir du rayonnement engendré par le tube à rayons X, appareil dans lequel, au cours d'une exposition aux rayons X, le faisceau de rayonnement (8a, 8b) et le support d'enregistrement (7) exposé à celui-ci sont déplacés l'un par rapport à l'autre dans une seule direction, caractérisé en ce que le profil d'intensité (I(x)) du faisceau de rayonnement (8,8a, 8b) à l'endroit du support d'enregistrement (7), la vitesse (v) du déplacement relatif entre le faisceau de rayonnement et le support d'enregistrement et la vitesse de rotation donnée (u) du tube à rayons X à anode rotative au cours de l'exposition sont adaptés les uns aux autres de façon que se compensent les variations d'intensité causées par des déplacements périodiques du spot focal au cours de l'exposition.

**2.** Appareil à rayons X selon la revendication 1, caractérisé en ce que l'adaptation est telle que la durée (t2 - t1, t4 - t3) pendant laquelle un point du support d'enregistrement (7) est balayé par un flanc du profil d'intensité correspond à la valeur réciproque de la vitesse de rotation (u) du tube à rayons X à anode rotative (1) ou à un multiple entier (m) de cette valeur.

**3.** Appareil à rayons X selon la revendication 2 ou 3, caractérisé en ce que la durée (t3 - t1, t4 - t2) pendant laquelle un point du support d'enregistrement (7) est balayé par un flanc et la partie rectiligne du profil d'intensité (I), correspond à la valeur réciproque de la vitesse de rotation (u) du tube à rayons X à anode rotative ou à un multiple entier (n) de cette valeur.

**4.** Appareil à rayons X selon la revendication 2 ou 3, caractérisé en ce que le profil d'intensité a une forme telle que, d'une part, la longueur (x3 - x2) du palier et, d'autre part, la longueur (x2 - x1) d'un flanc et la longueur (x3 - x1) d'un flanc et du palier sont respectivement dans le rapport m/s et n/s, s étant un entier et m et n sont des entiers correspondant à la vitesse de rotation que présente l'anode rotative lorsqu'un point du support d'enregistrement est balayé, d'une part, par un flanc et, d'autre part, par un flanc et le palier du profil d'intensité.

**5.** Appareil à rayons X selon l'une des revendications précédentes, caractérisé en ce qu'il est prévu au moins un circuit de réglage (12) servant à régler la vitesse v du déplacement relatif en fonction de la vitesse de rotation u ou la vitesse de rotation u en fonction de la vitesse v du déplacement relatif.

Fig.1

Fig.2

Fig.3